# DEMANDE DE BREVET EUROPEEN

(11) **EP 0 997 403 A1**
(43) Date de publication de la demande: **03.05.2000**
(21) Numéro de dépôt: 99402652.4
(22) Date de dépôt: 25.10.1999
(51) Int. Cl.: B65G 21/06, B65G 21/10

(54) **Système de transporteur à bande facilement déplacable, notamment pour une installation temporaire**

(30) Priorité: 23.10.1998 FR 9813331
(71) Demandeur: Societe Bibaut A.D.B.R., 60880 Le Meux (FR)
(72) Inventeur: Bibaut, Gilbert, 60880 Le Meux (FR)
(74) Mandataire: Rémont, Claude

(57) **Abrégé**

L'ossature est constituée de modules individuels d'ossature (1) qui sont conçus de manière à ce que chacun d'eux soit facilement déplaçable et transportable, et sensiblement indéformable en flexion et en torsion. Chaque module (1) comporte à chacune de ses extrémités (2, 3) quatre organes de liaison (4, 5 ; 6, 7) décalés verticalement et/ou transversalement l'un par rapport à l'autre et adaptés à coopérer respectivement avec les organes de liaison complémentaires (6, 7; 4, 5) de l'extrémité correspondante (3, 2) d'un second module (1) adjacent aligné avec le premier module pour permettre de fixer le second module (1) audit premier module (1), le cas échéant en porte-à-faux par rapport au premier module (1).

## Description

La présente invention concerne un système de transporteur à bande facilement déplaçable, notamment pour une installation temporaire.

La présente invention concerne également un module individuel d'ossature pour un système de transporteur à bande du type précité.

On connaît de nombreux systèmes de transporteur à bande du type précité, utilisables pour des chantiers de durée limitée, par exemple des chantiers de travaux publics et autres. De tels systèmes sont nécessaires principalement dans les cas où il n'est pas possible d'accéder directement avec des camions ou autres engins de transport aux endroits où des terres, gravas, déblais en tous genres doivent être extraits et transportés à distance. Une telle situation se présente souvent dans le cas de chantiers de curages ou de créations d'étangs, de fossés, de canaux, de rivières.

On utilise de façon classique, pour de tels travaux, des systèmes de transporteur à bande qui doivent être facilement déplaçables. De tels systèmes comportent une ossature métallique constituée de façon habituelle au moyen de profilés assemblés les uns aux autres, cette ossature étant portée par des supports prenant appui sur le sol. Le franchissement d'obstacles tels que des routes ou des étendues d'eau crée toujours des difficultés. En outre, lorsque le lieu d'extraction des déblais ou terres se déplace, le déplacement du système de transporteur est toujours une opération délicate et longue.

Le but de la présente invention est de remédier aux inconvénients des systèmes de transporteur à bande connus, et de proposer un système de transporteur à bande du type précité qui soit particulièrement adapté au franchissement d'obstacles en tous genres et à des déplacements fréquents en ne nécessitant pour cela que des moyens simples et classiques généralement disponibles sur n'importe quel chantier.

Suivant l'invention, le système de transporteur à bande facilement déplaçable, notamment pour une installation temporaire, est caractérisé en ce que son ossature est constituée de modules individuels d'ossature qui sont conçus de manière à ce que chacun d'eux soit facilement déplaçable et transportable, et sensiblement indéformable en flexion et en torsion, et en ce que chaque module comporte à chacune de ses extrémités quatre organes de liaison décalés verticalement et/ou transversalement l'un par rapport à l'autre et adaptés à coopérer respectivement avec les organes de liaison complémentaires de l'extrémité d'un second module adjacent aligné avec le premier module pour permettre de fixer le second module audit premier module, le cas échéant en porte-à-faux par rapport au premier module.

Ainsi, un module quelconque peut être fixé rigidement à un autre module pour former un assemblage rigide et indéformable facilitant le franchissement des obstacles, tandis que cette liaison rigide peut être facilement démontée pour permettre le déplacement des modules.

Suivant une version avantageuse de l'invention, les organes de liaison inférieurs de chaque module sont adaptés à permettre une liaison articulée entre ledit module et un module adjacent autour d'un axe transversal.

Ceci permet une adaptation simple et rapide de l'inclinaison de chaque module par rapport au module précédent et au module suivant afin de faciliter le franchissement des obstacles.

D'autres particularités et avantages de la présente invention apparaîtront dans la description détaillée ci-après.

Aux dessins annexés, donnés uniquement à titre d'exemples non limitatifs :
- la figure 1 est une vue en élévation d'un mode de réalisation d'un module individuel d'ossature permettant de réaliser un système de transporteur à bande selon un mode de réalisation de la présente invention ;
- la figure 2 est une vue d'extrémité du module de la figure 1 ;
- la figure 3 est une vue semblable à la figure 2 d'une variante de réalisation du module de la figure 1 ;
- la figure 4 est un schéma en élévation illustrant un mode de réalisation d'un système de transporteur à bande constitué au moyen de modules du type représenté à la figure 1, et adapté au curage d'une voie d'eau;
- la figure 5 est une vue depuis la droite de la figure 4 du système représenté à ladite figure 4 ;
- la figure 6 est une vue semblable à la figure 4 d'un autre mode de réalisation d'un système de transporteur à bande selon la présente invention ;
- la figure 7 est une vue agrandie de la liaison entre deux modules adjacents ;
- la figure 8 est une vue agrandie d'un détail de la figure 7 représentant un mode de réalisation du dispositif d'assemblage des organes de liaison supérieurs de deux modules adjacents :
- la figure 9 est une vue de dessus du dispositif d'assemblage de la figure 8 ;
- la figure 10 est une vue en élévation illustrant un mode de réalisation des éléments d'adaptation mâles et femelles adaptés aux extrémités de deux modules adjacents pour permettre une liaison articulée d'axe sensiblement vertical entre lesdits modules ;
- la figure 11 est une vue de dessus de la figure 10 ;
- la figure 12 est une vue prise depuis la gauche de la figure 10 du module représenté à la droite de cette figure 10.

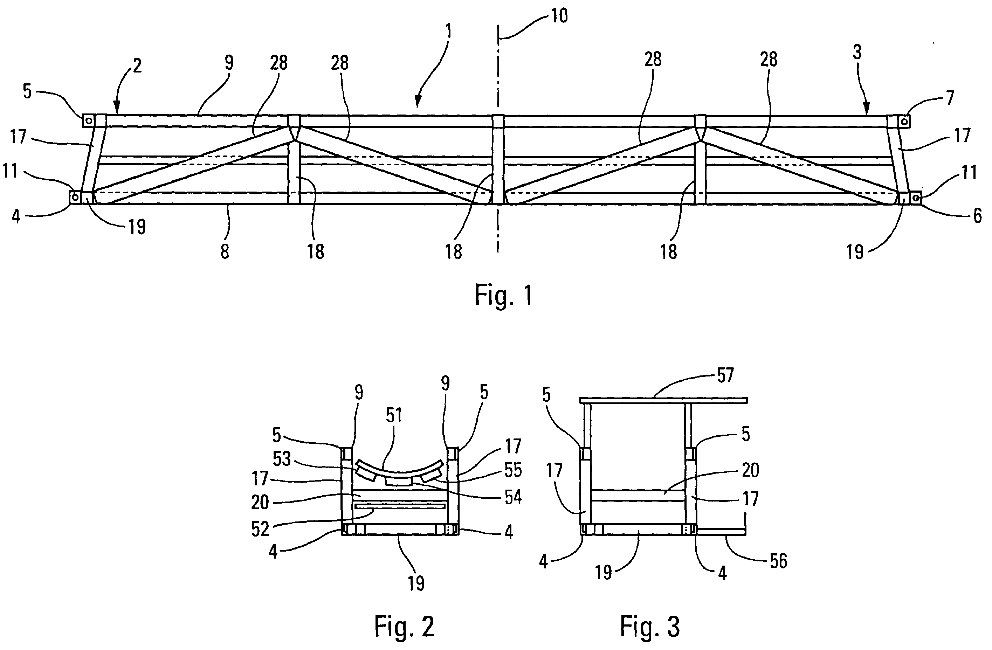

Dans le mode de réalisation représenté aux figures 1 et 2, le module individuel 1 d'ossature est adapté à constituer, avec d'autres modules identiques ou semblables, l'ossature d'un système de transporteur à bande facilement déplaçable, notamment pour une installation temporaire.

Le module individuel 1 est conçu de manière à être facilement déplaçable et transportable, et à être sensiblement indéformable en flexion et en torsion par rapport aux trois axes longitudinal, transversal et vertical de ce module.

Le module 1 comporte à chacune de ses deux extrémités 2, 3, deux organes de liaison inférieurs 4, 6, et deux organes de liaison supérieurs 5, 7 décalés verticalement et/ou transversalement l'un par rapport à l'autre et adaptés à coopérer respectivement avec les organes de liaison complémentaires 6, 4 et 7, 5 de l'extrémité correspondante 3, 2 d'un second module adjacent aligné avec le premier module 1 pour permettre de fixer le second module audit premier module 1, le cas échéant en porte-à-faux par rapport au premier module 1.

Dans l'exemple représenté aux figures 1 et 2, chaque module 1 a en coupe transversale une section sensiblement en forme de U, et comporte un organe de liaison inférieur 4, 6 prévu sensiblement à chacune des extrémités transversales de la base du U, et un organe de liaison supérieur 5, 7 prévu sensiblement à l'extrémité libre de chacune des deux branches du U.

On voit à la figure 1 que chaque module 1 comporte un moyen formant longeron 8, 9 disposé sensiblement dans l'alignement des deux organes de liaison opposés correspondants 4, 6; 5, 7 dudit module 1.

De façon plus précise deux organes de liaison inférieurs opposés 4, 6 sont reliés l'un à l'autre par un longeron longitudinal inférieur 8, et deux organes de liaison supérieurs opposés 5, 7 sont reliés l'un à l'autre par un longeron longitudinal supérieur 9.

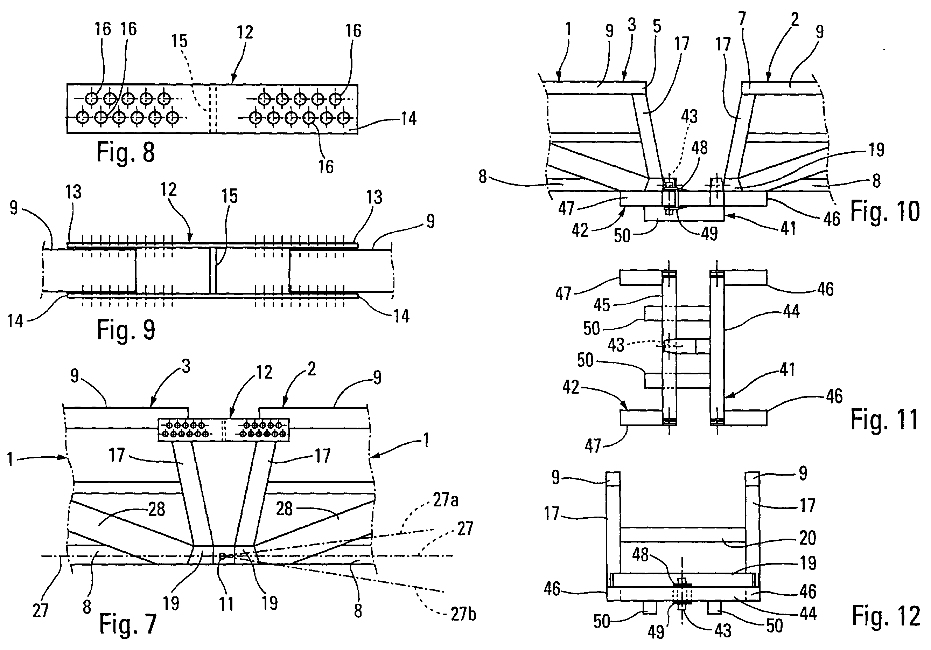

On voit, notamment aux figures 1 et 7, que les deux organes de liaison supérieurs 5, 7 d'une extrémité 2, 3 au moins de chaque module 1, sont décalés longitudinalement vers l'autre extrémité 3, 2 du module 1 par rapport aux deux organes de liaison inférieurs 4, 6 correspondants. Dans l'exemple représenté, les deux extrémités 2, 3 sont symétriques l'une de l'autre par rapport à un plan médian transversal vertical 10.

Les organes de liaison inférieurs 4, 6 de chaque module 1 sont adaptés à permettre une liaison articulée entre ledit module 1 et un module 1 adjacent autour d'un axe transversal 11 schématisé à la figure 7.

Ces organes de liaison inférieurs 4, 6 sont constitués par exemple chacun par une patte s'étendant selon un plan longitudinal perpendiculaire à l'assise du module 1, vertical si cette assise est horizontale. Les pattes 4 de l'extrémité 2 sont légèrement décalées transversalement par rapport aux pattes 6 de l'extrémité 3 pour que les pattes 4, 6 de chaque côté de deux modules 1 adjacents se trouvent placées côte à côte, dans la position représentée à la figure 7, pour permettre de les relier deux à deux par un axe transversal 11, par exemple par un boulon faisant office d'axe d'articulation facilement démontable.

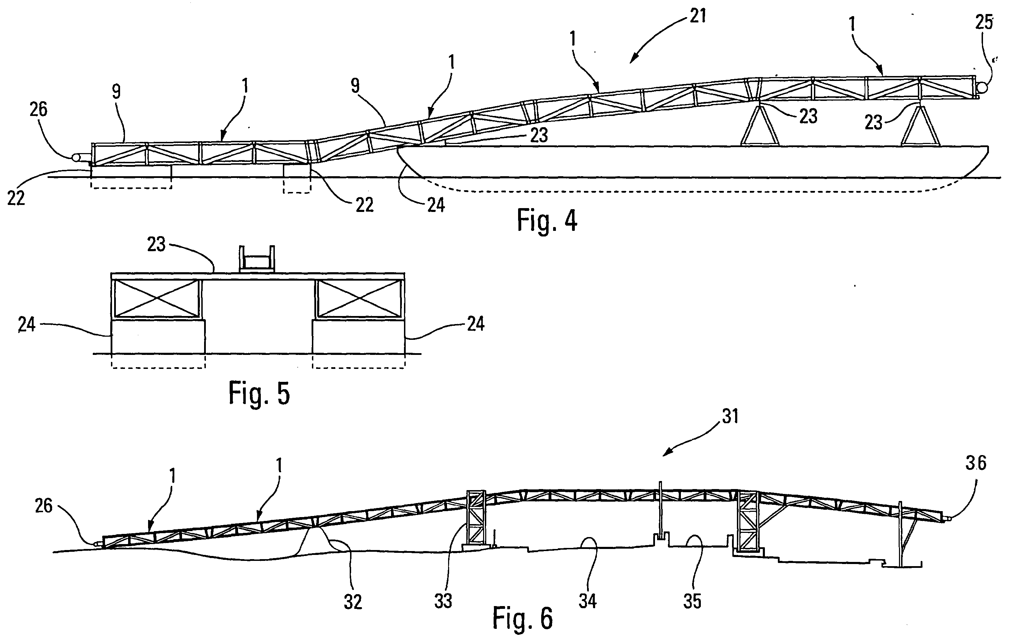

Cet axe d'articulation 11 et le décalage longitudinal des organes de liaison supérieurs 6 par rapport aux organes de liaison inférieurs 4 permet de donner à un second module articulé à un premier module une inclinaison dans un sens ou dans l'autre dans un plan longitudinal vertical, notamment pour franchir des obstacles (voir figures 4 et 6).

Comme schématisé aux figures 7 à 9, les organes de liaison supérieurs 5, 7 de chaque module 1 sont adaptés à coopérer avec des dispositifs d'assemblage 12 pour fixer rigidement et de manière réglable ledit module 1 à un module 1 adjacent, le cas échéant en porte-à-faux et selon une position angulaire prédéterminée des axes longitudinaux 27 desdits modules 1.

Comme schématisé à la figure 7, le module 1 représenté à la droite de cette figure étant par exemple le module 1 du côté aval, on donne à l'axe longitudinal 27 (qui passe par l'axe d'articulation 11) de ce module la position 27a, vers le haut, pour élever la bande du transporteur devant un obstacle, en rapprochant les organes de liaison supérieurs 4, 6 les uns des autres, ou la position 27b vers le bas pour abaisser la bande après le franchissement d'un obstacle.

Dans l'exemple représenté, chaque dispositif d'assemblage 12 a, en vue de dessus, une forme en H et comporte deux flasques 13, 14 parallèles adaptées à être placées de part et d'autre du longeron supérieur 9 correspondant de chaque module, les deux flasques étant reliées par une âme 15. Le dispositif d'assemblage 12 est relié aux deux longerons supérieurs 9 correspondants par tous moyens connus, par exemple pour des boulons (non représentés) traversant des trous 16 de chaque flasque et un trou (non représenté) du longeron 9, ou par des tiges filetées reliant les deux flasques 13, 14 de part et d'autre du longeron 9.

Chaque flasque 13, 14 comprend de nombreux trous 16. En choisissant le ou les trous adéquats, on règle la distance entre les deux longerons 9 et donc l'inclinaison angulaire entre les axes longitudinaux 27 des deux modules qui sont par ailleurs articulés l'un à l'autre par rapport à l'axe transversal d'articulation 11.

Dans l'exemple représenté, chaque module 1 est réalisé essentiellement en tubes, notamment en tubes de section carrée. Ce mode de réalisation procure au module une très grande rigidité et une très grande résistance à la torsion et à la flexion. On peut ainsi réaliser en tubes au moins les longerons inférieurs 8 et supérieurs 9, les montants d'extrémité 17, qui sont inclinés par rapport à la verticale, les montants intérieurs 18, les traverses inférieures 19 et médianes 20 et les entretoises 28.

Les longerons inférieurs 8 et les traverses inférieures 19 constituent à ce propos une surface d'assise sur laquelle chaque module peut facilement glisser sur le sol.

On a représenté aux figures 4 à 6 deux exemples de réalisation de système de transporteur à bande selon la présente invention.

Dans la réalisation des figures 4 et 5, le système 21 comprend un premier module reposant sur des flotteurs 22 alors que les modules suivants reposent sur des poutres 23 reposant sur deux barges parallèles 24 entre lesquelles peut être introduite une barge de chargement, (non représentée), destinée à recueillir les débris projetés par le tambour de tête 25.

Dans la réalisation de la figure 6, le système 31 comporte un premier module dont l'extrémité amont, qui porte le tambour arrière 26, repose sur le sol et dont l'extrémité aval est en porte-à-faux au-dessus du sol en étant reliée rigidement à un second module dont l'extrémité aval repose sur un support 32.

La liaison entre les troisième et quatrième modules est réalisée en porte-à-faux entre le support 32 et le pilier 33 au-delà duquel le système 31 traverse deux routes 34, 35 et est supporté par divers piliers jusqu'au tambour de tête 36.

Dans ces deux modes de réalisation, plusieurs liaisons entre deux modules adjacents se font avec une inclinaison angulaire qui permet d'adapter le système à toutes les dénivellations dans un sens ou dans l'autre.

Des systèmes de transporteur à bande tels que les systèmes 21 et 31 décrits ci-dessus comportent avantageusement des moyens de tension de la bande (non représentés) disposés et agissant en direction longitudinale pour éviter la présence, sous l'assise inférieure d'un module, d'équipements encombrants dans la direction verticale.

Le système de transporteur à bande selon la présente invention comporte de préférence un moteur hydraulique pour l'entraînement de la bande. Un tel moteur présente l'avantage d'avoir une vitesse facilement variable tout en évitant la présence de câbles et d'équipements électriques sous tension qui peuvent être dangereux, en particulier pour des travaux dans l'eau.

Dans le mode de réalisation représenté aux figures 10 à 12, chaque module 1 est adapté à recevoir à chacune de ses extrémités 2, 3, un élément d'adaptation respectivement mâle et femelle 42, 41 fixé aux organes de liaison inférieurs 4, 6 correspondants.

Deux éléments d'adaptation respectivement mâle et femelle 42, 41 sont complémentaires l'un de l'autre et adaptés à recevoir un axe d'articulation sensiblement vertical 43 pour permettre une liaison articulée d'axe 43 sensiblement vertical entre deux modules 1 adjacents portant chacun l'un de ces deux éléments 41, 42.

Dans l'exemple représenté, chaque élément d'adaptation 41, 42 comporte une traverse, respectivement 44, 45, adaptée à être fixée aux organes de liaison inférieurs 4, 6 correspondants, par exemple par l'intermédiaire de pattes (non représentées) boulonnées aux organes de liaison 4, 6.

Chaque traverse 44, 45 porte deux bras, respectivement 46, 47, s'étendant sous la traverse inférieure 19 et sous les longerons inférieurs 8 correspondants.

La traverse 45 de l'élément 42 porte l'axe 43 qui traverse deux pattes 48, 49 portées par la traverse 44.

La traverse 44 porte en outre deux bras inférieurs 50 s'étendant vers l'élément 41 et passant sous la traverse 45 pour éviter tout effet de basculement.

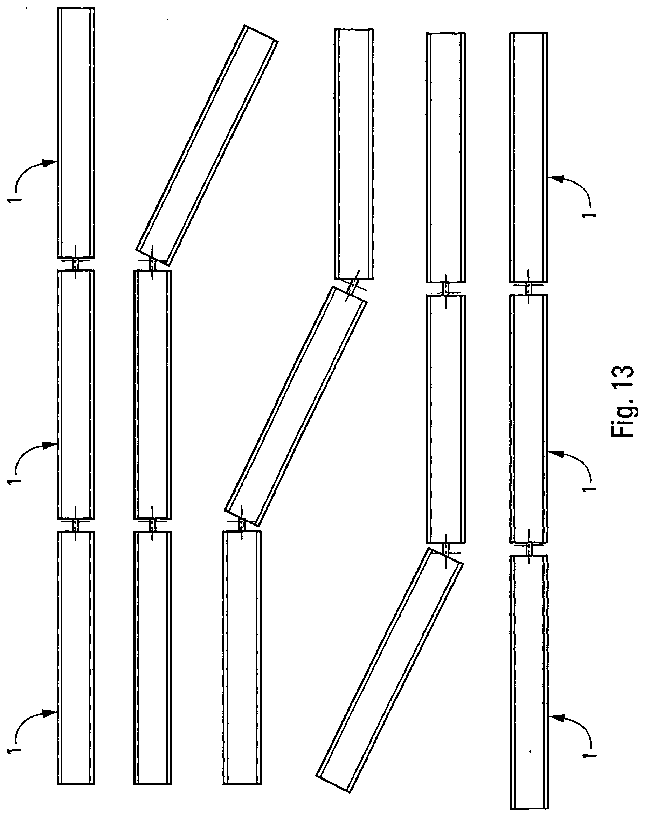

Les éléments d'adaptation 41, 42 permettent un déplacement facile de plusieurs modules adjacents par ripage et glissement sur un sol sensiblement plan, comme représenté à la figure 13.

On a représenté à la figure 13 le ripage d'un ensemble de trois modules en cinq temps successifs illustrés par cinq dessins de bas en haut. Partant du dessin du bas de la feuille représentant trois modules 1 alignés, on pousse l'extrémité gauche du module de gauche qui pivote ainsi par rapport au module du milieu. On pousse ensuite l'extrémité droite du module de gauche pour amener ce module dans une nouvelle position qui est, par exemple, sensiblement parallèle à sa position de départ, ce qui entraîne le pivotement du module médian par rapport au module de droite. On pousse ensuite l'extrémité droite du module médian pour l'amener dans une position parallèle à la nouvelle position du module de gauche, ce qui entraîne le pivotement du module de droite. On pousse ensuite l'extrémité droite du module de droite.

On a ainsi décrit un système de transporteur à bande facilement déplaçable constitué de modules individuels d'ossature pouvant être assemblés facilement l'un par rapport à l'autre et déplacés facilement soit individuellement, soit l'un par rapport à l'autre.

Chaque module individuel d'ossature a avantageusement des dimensions correspondant à celles autorisées pour les transports par route, et a par exemple une longueur de douze mètres.

La demanderesse a obtenu d'excellents résultats en utilisant pour la réalisation de ces modules des tubes carrés de 150 X 150 X 5 mm.

On a schématisé sur la figure 2 le brin supérieur 51 de la bande transporteuse, qui est disposé entre les longerons supérieurs 9 et repose sur des rouleaux 53, 54, 55 disposés de façon classique en forme d'auge pour donner un profil concave à la surface supérieure de la bande 51. Le brin de retour 52 passe, par exemple, entre les traverses médianes 20 et les traverses inférieures 19.

De façon classique, on dispose les modules 1 de manière que leur assise soit parfaitement horizontale, afin d'éviter tout risque de déport transversal de la bande.

Pour installer un système de transporteur à bande 21, 31 selon la présente invention, on installe et assemble de façon classique l'ensemble des modules 1 pour réaliser l'ossature, puis on installe la bande 51, 52 sur les rouleaux 53 à 55.

On a schématisé à la figure 3 un module 1 identique au module des figures 1 et 2 et comportant en outre une passerelle latérale 56 et une toiture 57 classiques.

Lorsque les modules 1 sont réalisés en tubes, on peut facilement utiliser les longerons supérieurs 9 comme chemins de roulement d'une trémie mobile (non représentée) de chargement des déblais sur la bande 51.

Bien entendu, la présente invention n'est pas limitée aux modes de réalisations que l'on vient de décrire et on peut apporter à ceux-ci de nombreux changements et modifications sans sortir du domaine de l'invention.

Notamment, les organes de liaison de deux modules adjacents peuvent être différents de ceux décrits ci-dessus, mais sont de préférence toujours conçus pour permettre une liaison articulée de ces deux modules autour d'un axe transversal horizontal.

## Revendications

1. Système de transporteur à bande (21, 31) facilement déplaçable, notamment pour une installation temporaire, caractérisé en ce que son ossature est constituée de modules individuels d'ossature (1) qui sont conçus de manière à ce que chacun d'eux soit facilement déplaçable et transportable, et sensiblement indéformable en flexion et en torsion, et en ce que chaque module (1) comporte à chacune de ses extrémités (2, 3) quatre organes de liaison (4, 5; 6, 7) décalés verticalement et/ou transversalement l'un par rapport à l'autre et adaptés à coopérer respectivement avec les organes de liaison (6, 7; 4, 5) complémentaires de l'extrémité correspondante (3, 2) d'un second module (1) adjacent aligné avec le premier module (1) pour permettre de fixer le second module (1) audit premier module (1), le cas échéant en porte-à-faux par rapport au premier module (1).

2. Système de transporteur à bande selon la revendication 1, caractérisé en ce que chaque module (1) a en coupe transversale une section sensiblement en forme de U, et comporte un organe de liaison inférieur (4, 6) prévu sensiblement à chacune des extrémités transversales de la base du U, et un organe de liaison supérieur (5, 7) prévu sensiblement à l'extrémité libre de chacune des deux branches en U.

3. Système de transporteur à bande selon la revendication 1 ou 2, caractérisé en ce que chaque module (1) comporte un moyen formant longeron (8, 9) disposé sensiblement dans l'alignement des deux organes de liaison opposés (4, 6 ; 5, 7) correspondants dudit module (1).

4. Système de transporteur à bande selon l'une quelconque des revendications précédentes, caractérisé en ce que les deux organes de liaison supérieurs (5, 7) d'une extrémité (2, 3) au moins de chaque module (1) sont décalés longitudinalement vers l'autre extrémité (3, 2) du module (1) par rapport aux deux organes de liaison intérieurs (4, 6) correspondants.

5. Système de transporteur à bande selon l'une quelconque des revendications précédentes, caractérisé en ce que les organes de liaison inférieurs (4, 6) de chaque module (1) sont adaptés à permettre une liaison articulée entre ledit module (1) et un module (1) adjacent autour d'un axe transversal (11).

6. Système de transporteur à bande selon l'une quelconque des revendications précédentes, caractérisé en ce que les organes de liaison supérieurs (5, 7) de chaque module (1) sont adaptés à coopérer avec des dispositifs d'assemblage (12) pour fixer rigidement et de manière réglable ledit module (1) à un module (1) adjacent, le cas échéant en porte-à-faux et selon une position angulaire prédéterminée des axes longitudinaux (27) desdits modules (1).

7. Système de transporteur à bande selon l'une quelconque des revendications précédentes, caractérisé en ce que chaque module (1) est réalisé essentiellement en tubes, notamment en tubes de section carrée.

8. Système de transporteur à bande selon l'une quelconque des revendications précédentes, caractérisé en ce qu'il comporte des moyens de tension de la bande disposés et agissant en direction longitudinale.

9. Système de transporteur à bande selon l'une quelconque des revendications précédentes, caractérisé en ce qu'il comporte un moteur hydraulique pour l'entraînement de la bande.

10. Système de transporteur à bande selon l'une quelconque des revendications précédentes, caractérisé en ce que chaque module (1) est adapté à recevoir à chacune de ses extrémités (2, 3), fixé aux organes de liaison (4, 6) correspondants, un élément d'adaptation (42, 41) respectivement mâle et femelle, deux éléments d'adaptation respectivement mâle et femelle étant complémentaires l'un de l'autre et adaptés à recevoir un axe d'articulation sensiblement vertical (43) pour permettre une liaison articulée d'axe sensiblement vertical (43) entre deux modules (1) adjacents portant chacun l'un de ces deux éléments (41, 42).

11. Module d'ossature individuel (1) pour un système de transporteur à bande, caractérisé en ce qu'il est adapté à faire partie d'un système de transporteur à bande (21, 31) selon l'une quelconque des revendications précédentes.
